(19) Europäisches Patentamt
European Patent Office
Office européen des brevets

(11) **EP 0 717 596 B1**

## (12) EUROPEAN PATENT SPECIFICATION

(45) Date of publication and mention
of the grant of the patent:
**05.11.1997 Bulletin 1997/45**

(21) Application number: **94924551.8**

(22) Date of filing: **02.08.1994**

(51) Int. Cl.⁶: **A23C 19/076**, A23C 19/09,
A23C 19/10

(86) International application number:
**PCT/US94/08730**

(87) International publication number:
**WO 95/04468 (16.02.1995 Gazette 1995/08)**

(54) **SHELF STABLE DAIRY PRODUCTS**

LAGERSTABILE MOLKEREIPRODUKTE

PRODUITS LAITIERS DE LONGUE CONSERVATION

(84) Designated Contracting States:
**AT BE CH DE DK ES FR GB GR IE IT LI LU MC NL
PT SE**

(30) Priority: **09.08.1993 US 104190**

(43) Date of publication of application:
**26.06.1996 Bulletin 1996/26**

(73) Proprietor:
**THE PILLSBURY COMPANY
Minneapolis Minnesota 55402-1464 (US)**

(72) Inventors:
• **BHATIA, Usha, B.
Roseville, MN 55112 (US)**
• **YOUNG, Robert, Yao, Jou
Robbinsdale, MN 55422 (US)**

(74) Representative:
**Belcher, Simon James et al
Urquhart-Dykes & Lord
Tower House
Merrion Way
Leeds LS2 8PA (GB)**

(56) References cited:
EP-A- 0 246 197          WO-A-92/08361
GB-A- 2 032 241          US-A- 4 244 977

• DATABASE FSTA INTERNATIONAL FOOD
INFORMATION SERVICE (IFIS),
FRANFURT/MAIN, DE 86-01-p0054 1986, D.
SCHMIDT 'Microbiological and sensory
characteristics of a home style confectionary
product prepared with cream cheese' &
JOURNAL OF FOOD QUALITY, vol.7, no.4, 1985
pages 283 - 288
• ANALES DE LA NUTRITION ET DE
L'ALIMENTATION, vol.32, no.2-3, 1978 pages 597
- 615 C. CHEFTEL ET AL. 'Aliments à humidité
intermédiaire: gels polysaccharidiques et
protéiques'
• JOURNAL OF FOOD SCIENCE, vol.43, no.1,
1978, CHICAGO US pages 341 - 344 L.
KREISMAN ET AL. 'Storage stability of
intermediate moisture food process cheese
foodd products'
• PATENT ABSTRACTS OF JAPAN vol. 12, no. 491
(C-554) & JP,A,63 202 339 (SNOW BRAND MILK
PROD CO)
• JOURNAL OF FOOD SCIENCE, vol.43, no.1,
1978, CHICAGO US pages 341 - 344 L.
KREISMAN ET AL. 'Storage stability of
intermediate moisture food process cheese food
products'

## Description

### Field of the invention

The invention relates generally to shelf stable dairy products and methods of producing the same. More specifically, the invention is directed to dairy products including cheeses and methods of stabilizing these products against spoilage for extended periods of time.

### Background to the invention

Shelf stable food fillings are well known. Shelf stable food fillings have been developed for several different types of food, including chicken, beef, and fruit. For example, Lee et al US-5059433 disclose a shelf stable filling material with a water activity ($A_w$) of less than 0.85. The filling materials have a moisture content below 28% by weight. The filling components are mixed at room temperature, cooled down to a temperature below about 60°F (15.5°C) and kept refrigerated prior to use.

Wallin et al US-4623542 and US-4612198 disclose a shelf stable flavoured filling material. Viscosity and pH are controlled to provide a filling formula which gives a high product quality, high moisture content, one of good shelf stability and product stability. Kingham et al US-4721622 disclose a shelf stable, filled food product wherein the filling has a water activity range ($A_w$) between 0.20 to 0.99. Bernotavicz US-3922353 discloses a shelf stable meat containing filling with a moisture content of at least about 50% by weight with an $A_w$ of at least about 0.90. Ramet FR-A-2610795 discloses preserving food with an aqueous solution of salt, polyols, and sugar. The pH is adjusted to 3 to 5.5, and the $A_w$ is between 0.60 and 0.85.

GB-A-2032241 discloses a shelf stable cheese filling containing cream cheese (53%), corn syrup (26.7%; 84% solids), water (15.54%), starch (0.56%), gelatin (0.55%) and lactic acid (0.23%). A humectant is present in an amount of more than 25%, and a pasteurisation step is used in the manufacture of the cheese filling to obtain a shelf stable product.

WO-A-9208361 discloses cheesecake formulations which comprise cream cheese (29.7% by weight), with eggs, sugar, alginic and hydrochloric acids and lemon juice. Manufacture of the cheesecake includes a pasteurising step.

There remains a need to develop shelf stable dairy products such as cream cheese fillings. Known cheese fillings generally are not shelf stable, and therefore, must be either refrigerated or aseptically packaged in order to prevent spoilage, for example, as in Lee et al US-5057433. Further, the prior art preservation methods are generally costly and time demanding. Further, refrigerated storage and transportation may also be necessary to avoid spoilage and fully utilize the dairy products. This requires substantial capital and storage costs. Furthermore, these known cheese fillings are sensitive ingredients once they are unpackaged, and will spoil rapidly if they are not used. Thus, a substantial need exists for shelf stable dairy products as well as methods for providing the same.

### Summary of the invention

In accordance with a first aspect of the invention there is provided a shelf stable dairy product comprising:

(a) from about 20 to 70 wt% of a cream cheese which comprises less than about 55 wt% water and more than about 33 wt% milk fat;
(b) from about 29 to 50 wt% of a humectant that is effective to lower $A_w$ to less than about 0.91; and
(c) from about 1 to 10 wt% of a physical stabilizer,

in which the humectant is intermixed with the cream cheese, and the shelf stable dairy product has a water content ranging from about 32 to 41 wt%.

A preservative and an acidulant can optionally be added to lower the pH to about 2 to 5 and protect the dairy product against microbial growth.

In another aspect, the present invention provides a food product which includes a shelf stable dairy product as disclosed above. Examples of such food products include bakery products, specifically, pastries, doughnuts, bagels, danishes, turnovers and toaster strudel.

Preferably, the shelf stable cheese of the invention includes a cream cheese, a humectant, a physical stabilizer, and water. The physical stabilizer may comprise a cellulose compound and one or more compounds selected from the group consisting of starch, xanthan gum, locust bean gum and guar gum.

In a further aspect, the invention provides a method of preserving a cream cheese filling to provide shelf stability comprising mixing:

(a) from about 20 to 70 wt% of a cream cheese which comprises less than about 55 wt% water and more than about 33 wt%. milk fat,

(b) from about 29 to 50 wt% of a humectant which is effective to lower $A_w$ to less than about 0.91, and

(c) from about 1 to 10 wt% a physical stabilizer,

in which the cream cheese filling has a water content ranging from about 32 to 41 wt%.

The shelf stable dairy product of the invention has the advantage that it can be stored under ambient conditions for periods up to about 8 weeks. This eliminates the need for refrigerated storage and refrigerated transportation of the dairy product. Additionally, the dairy product of the invention eliminates the need for additional manufacturing procedures that are necessary to handle sensitive ingredients, which are ingredients known to be a potential source of a microbial hazard. Thus, the dairy product of the present invention reduces costs substantially, and adds increased flexibility to the manufacturing of food products which incorporate the dairy product.

Detailed description of the invention

The invention is directed to shelf stable dairy products including an amount of a humectant effective to lower $A_w$ to less than about 0.91, water and a physical stabiliser. Optional ingredients include a preservative and an acidulant to lower the pH to about 2 to 5.

A. Dairy Product

The invention is directed to the preservation of dairy products. Generally, dairy products spoil from yeast and mould growth. Yeast and mould may grow in the dairy products because of the typically high water activity ($A_w$ = 0.91 and above) in dairy products. Dairy products add flavour, texture, mouthfeel, and nutritional value, among other qualities, to any given food product in which they are incorporated.

Generally, the dairy products of the invention comprise from about 20 to 70 wt% of a cream cheese. Dairy proteins and products may tend to spoil or otherwise become unacceptable food products through curdling (protein agglomeration and fall out) as well as yeast and mould growth on the dairy product. While curdling may be desirable in certain food products (e.g. cheeses), it may also be undesirable in certain products (e.g. milks). In one preferred aspect, the invention is directed a cream cheese filling.

Cream cheese is a soft unripened cheese made from milk and cream. The milk and cream mixture is homogenized, pasteurized, cooled to about 80°F (27°C) and set. In a typical embodiment, the cream cheese has less than 55% water by weight and more than 33% milk fat.

The weight percentage of cream cheese used in the shelf stable dairy product is about 20 to 70% by weight based on the total weight of the shelf stable dairy product. Preferably, the amount of the cream cheese is about 50 to 70% by weight. Most preferably, the amount of the cream cheese in the shelf stable filling is about 60 to 67% by weight.

B. Lowering Water Activity

In general, the amount of water in the shelf stable dairy product is about 32 to 41% by weight of the shelf stable product. Preferably, this amount of water in the shelf stable dairy product is about 35 to 38%.

The composition of the invention also comprises a humectant which lowers water activity, ($A_w$). $A_w$ is a measure in a system of the unbound free water available to support biological and chemical reactions. One measure of water activity is ($A_w$) = ($p/p_o$), where p is the vapour pressure of water in the system (the shelf stable dairy product) and $p_o$ is the vapour pressure of pure water at the same temperature. Lowering $A_w$ restricts the growth of bacteria and is accomplished by lowering p, the vapour pressure of water in the dairy product. P may be depressed by including sufficient amounts of a freezing point depressant in the dairy product. The drop in p is in accordance with Raoult's Law which states that p = ($A_w$) * ($p_o$), where $A_w$ is also the ratio of moles of freezing point depressant over the sum of moles of constituents in the shelf stable dairy product. Most bacteria of concern in food preservation require $A_w$ values of greater than 0.90 to grow. Thus, lowering $A_w$ to below 0.91 prevents most kinds of bacteria from growing in the dairy product.

A humectant is used to lower the water activity ($A_w$) of the filling to below about 0.91. The humectant can be selected from, but is not limited to an alcohol, a saccharide, a gum, a salt and mixtures thereof.

Preferably, the humectant is selected from the group consisting of a monohydric alcohol, a diol, a polyol; a monosaccharide, a disaccharide, a trisaccharide, salt thereof and mixtures thereof. More preferably, the humectant is selected from the group consisting of glycerol, fructose, sucrose, glucose, propylene glycol, sodium chloride, sorbitol, mannitol, polydextrose, carboxymethyl cellulose, guar gum, molasses, potassium polymetaphosphate, triacetin, propionate, sodium lactate, monosodium glutamate, corn syrup, glycine, 1,2-propanediol, alginate and mixtures thereof.

The humectant lowers the $A_w$ to between about 0.75 to 0.91, and more preferably, $A_w$ is lowered to about 0.80 to 0.89 for the composition.

The amount of the humectant is about 29 to 50 by weight of the shelf stable dairy product. and about 25 to 65% by weight of the shelf stable cheese filling. More preferably, the amount of the humectant is about 29 to 50% by weight of the shelf stable cream cheese filling.

Preferably, the humectant comprises about 2 to 10% by weight of glycerine based on the total weight of the dairy product. More preferably, the humectant comprises a mixture of about 2 to 10% by weight glycerine, 10 to 50% by weight fructose and 0 to 50% by weight sucrose based on the total weight of the shelf stable dairy product. In a preferred embodiment the ratio of salt to sugar in the humectant is balanced to achieve a desirable taste that is not salty. Preferably, the cheese filling comprises less than about 1% by weight of the salt.

As an example, in a typical cream cheese, the normal freezing point is about -18°C. A shelf stable cream cheese of the invention has a freezing point of below about -30°C. More preferably, the freezing point of the shelf stable cream cheese is below about -35°C.

The total amount of the dairy product in the shelf stable dairy product is important when selecting the humectant. If the given product has at least about 50% by weight dairy product or more, the humectant should comprise glycerine. Preferably, the shelf stable dairy product comprises about 2 to 10% weight glycerine when the shelf stable dairy product has at least about 50% by weight dairy product. Glycerine is generally a more potent humectant than simple sugars, and when the amount of dairy product in the filling exceeds 50% by weight, simple sugars alone are insufficient to reduce $A_w$ to below 0.91.

## C. Stabilizer

A physical stabilizer is added to the shelf stable dairy product of the present invention to increase viscosity, provide stability to high heat, high shear, frozen temperatures and acidity. In addition, the physical stabilizer provides freeze/thaw stability and provides a smooth texture.

The amount of the physical stabilizer is about 1 to 10% by weight of the shelf stable dairy product. Preferably, the amount of the physical stabilizer is 2 to 8% by weight. More preferably, the amount of the physical stabilizer is 2 to 5% by weight.

Generally, the physical stabilizer can be a gum, a cellulose compound, a starch, and mixtures thereof. Specifically, the gums are selected from the group consisting of xanthan gum, locust bean gum, guar gum and mixtures thereof. The gum mixture provides stability to heat, high shear, acidity and freeze thaw. Preferably, the gum mixture comprises about 40 to 60% by weight xanthan gum, about 25 to 40% by weight locust bean gum and about 10 to 25% by weight guar gum.

The preferred starch is a cold water swelling starch which can be that sold under the trade mark ULTRASPERSE by National Company. The starch increases viscosity and adds heat, acid and shear stability. In a typical environment of the present invention, the gum mixture comprises about 0.1 to 0.5% by weight of the total shelf stable dairy product weight, and the starch about 1 to 7.5% by weight. In one embodiment, the gum mixture will comprise 0.2 to 0.4% by weight of the shelf stable dairy product, and the starch will comprise about 1 to 3% by weight.

In a preferred embodiment, the physical stabilizer further comprises a cellulose compound. The cellulose compound prevents liquid separation in the shelf stable dairy product. The cellulose compound can be selected from the group consisting of carboxymethyl cellulose, carboxyethyl cellulose, carboxypropyl cellulose, and mixtures thereof. Preferably, there is about 0.1 to 0.5% by weight of carboxymethyl cellulose in the shelf stable dairy product. More preferably, the amount of the carboxymethyl cellulose is about 0.2 to 0.4% by weight. Most preferably, the amount of the carboxymethyl cellulose is about 0.3% by weight in the shelf stable dairy product.

## D. Acidulants

An acidulant can be utilized in the shelf stable dairy product to adjust the pH level to about 2 to 5. The pH is lowered in the dairy product to obtain the optimum preserving activity from the preservative. Generally, the pH is adjusted to about the pKa level of the preservative. Preferably, the pH level is adjusted to about 3.0 to 4.5. More preferably, the pH level is adjusted to about 3.5 to 4.0.

Generally, the acidulant can be any food grade acid. Specifically, the acidulant can be selected from the group consisting of phosphoric acid, sulphuric acid, adipic acid, tartaric acid, succinic acid, acetic acid, fumaric acid, propionic acid, citric acid, malic acid, lactic acid and mixtures thereof. Preferably, the acidulant is citric acid.

Preferably, the amount of the acidulant in the shelf stable dairy product is about 0.15 to 0.85% by weight. More preferably, the amount of acidulant is about 0.20 to 0.65% by weight. Most preferably, the amount of the acidulant is about 0.20 to 0.45% by weight.

## E. Preservatives

The invention may also comprise a preservative. Generally, a preservative protects against bacterial growth in a dairy product. The preservative acts as a yeast-mould inhibitor in the shelf stable dairy product. Generally, the preservative can be any food grade preservative. Specifically, the preservative can be selected from the group consisting of sorbic acid, potassium sorbate, sodium sorbate, sodium propionate, calcium propionate, sodium benzoate, calcium benzoate, mixtures thereof, and other commercially available inhibitors commonly used in foods. Preferably, the preservative is sorbic acid or potassium sorbate.

Preferably, the amount of the preservative is about 0.05 to 0.35% by weight of the shelf stable dairy product. More preferably, the amount of the preservative is about 0.07 to 0.25% by weight. Most preferably, the amount of the preservative is about 0.075 to 0.15% by weight.

Table 1

| (wt-%) | | | |
|---|---|---|---|
| | Useful | Working | Preferred |
| Cream Cheese | 20-70 | 20-70 | 60-67 |
| Humectant | 25-65 | 25-65 | 29-50 |
| $A_w$ | 0.6-0.91 | 0.75-0.91 | 0.8-0.89 |
| Stabilizer | 1-10 | 2-8 | 2-5 |
| Acidulant | 0.15-0.85 | 0.2-0.65 | 0.25-0.45 |
| Preservative | 0.05-0.35 | 0.07-0.25 | 0.075-0.15 |
| pH | 2-5 | 3.0-4.5 | 3.5-4.0 |

Methods of Preservation

The invention is also directed to a method for preserving a cream cheese filling. To prepare a shelf stable dairy product of the present invention, a cream cheese filling is mixed with an amount of a humectant effective to lower $A_w$ to below 0.91, and optionally, an effective preserving amount of a preservative and an acidulant to adjust the pH to about 2 to 5. Preferably, the humectant comprises about 2 to 10% by weight glycerine based on the total weight of the shelf stable dairy product. The method of preserving the cream cheese filling further comprises contacting the dairy product with a physical stabilizer. Preferably, the physical stabilizer comprises about 0.1 to 0.5% by weight of a cellulose compound and about 1.5 to 7.9% by weight of one or more stabilizers selected from the group consisting of starch, xanthan gum, locust bean gum, and guar gum. More preferably, the cellulose compound is selected from the group consisting of carboxymethyl cellulose, carboxyethyl cellulose, and carboxypropyl cellulose. In a preferred embodiment, the cellulose compound is carboxymethyl cellulose.

The invention is also directed to the preparation of a food product comprising the shelf stable dairy product of the present invention. Examples of typical food products utilizing the shelf stable dairy product of the present invention are bakery products including pastries, danishes, bagels, turnovers, doughnuts and toaster strudel.

Working Examples

Working Examples 1 to 5 show various exemplary cream cheese compositions formulated in accordance with the invention.

| WORKING EXAMPLE 1 | |
|---|---|
| INGREDIENT | % |
| Cream Cheese | 71.88 |
| High Fructose Corn Syrup | 11.14 |
| Glycerine | 5.00 |
| Salt | 0.40 |
| Sucrose | 8.93 |
| Potassium Sorbate | 0.10 |
| Citric Acid | 0.35 |
| Gum Blends | 0.15 |
| Carboxymethyl Cellulose | 0.30 |
| Dried Cream Cheese | 0.00 |
| Modified Corn Starch ULTRASPERSE™ | 1.75 |
| | 100.00 |

| WORKING EXAMPLE 2 | |
|---|---|
| INGREDIENT | % |
| Cream Cheese | 61.88 |
| High Fructose Corn Syrup | 11.14 |
| Glycerine | 5.00 |
| Salt | 0.40 |
| Sucrose | 13.93 |
| Potassium Sorbate | 0.10 |
| Citric Acid | 0.35 |
| Gum Blends | 0.15 |
| Carboxymethyl Cellulose | 0.30 |
| Dried Cream Cheese | 5.00 |
| Modified Corn Starch ULTRASPERSE™ | 1.75 |
| | 100.00 |

| WORKING EXAMPLE 3 | |
|---|---|
| INGREDIENT | % |
| Cream Cheese | 51.88 |
| High Fructose Corn Syrup | 16.14 |
| Glycerine | 5.00 |
| Salt | 0.40 |
| Sucrose | 13.93 |
| Potassium Sorbate | 0.10 |
| Citric Acid | 0.35 |
| Gum Blends | 0.15 |
| Carboxymethyl Cellulose | 0.30 |
| Dried Cream Cheese | 10.00 |
| Modified Corn Starch ULTRASPERSE™ | 1.75 |
| | 100.00 |

| WORKING EXAMPLE 4 | |
|---|---|
| INGREDIENT | % |
| Cream Cheese | 63.75 |
| High Fructose Corn Syrup | 15.30 |
| Glycerine | 5.00 |
| Salt | 0.40 |
| Sucrose | 8.83 |
| Potassium Sorbate | 0.10 |
| Citric Acid | 0.35 |
| Gum Blends | 0.15 |
| Carboxymethyl Cellulose | 0.30 |
| Dried Cream Cheese | 4.07 |
| Modified Corn Starch ULTRASPERSE™ | 1.75 |
| | 100.00 |

| WORKING EXAMPLE 5 | |
|---|---|
| INGREDIENT | % |
| Cream Cheese | 63.75 |
| High Fructose Corn Syrup | 19.47 |
| Glycerine | 5.00 |
| Salt | 0.40 |
| Sucrose | 8.83 |
| Potassium Sorbate | 0.10 |
| Citric Acid | 0.35 |
| Gum Blends | 0.15 |
| Carboxymethyl Cellulose | 0.20 |
| Modified Corn Starch ULTRASPERSE™ | 1.75 |
| | 100.00 |

Shelf Stability

In accordance with the invention, a cream cheese filling comprising about 64% cream cheese, about 19% high fructose corn syrup, about 5% glycerol, about 0.6% salt, about 9.4% sucrose, about 0.35% citric acid, about 0.15% of a gum blend, about 1% modified corn starch and about 0.1% potassium sorbate as a preservative was inoculated with *staphylococcus aureus* and *salmonella* at 25°C and 32°C. The cream cheese samples were tested regularly for eight weeks. The study showed that there was no regular yeast or regular mould growth at 25°C or 32°C. Additionally, there was no recovery of the *staphylococcus aureus* and *salmonella* organisms after 3 days. The initial plate count remained static throughout the eight weeks of the study. These results demonstrate that the cream cheese filling is shelf stable at 25°C and 32°C for 8 weeks.

**Claims**

1. A shelf stable dairy product comprising:

   (a) from about 20 to 70 wt% of a cream cheese which comprises less than about 55 wt% water and more than about 33 wt% milk fat;

   (b) from about 29 to 50 wt% of a humectant that is effective to lower $A_w$ to less than about 0.91; and

   (c) from about 1 to 10 wt% of a physical stabilizer,

   in which the humectant is intermixed with the cream cheese, and the shelf stable dairy product has a water content ranging from about 32 to 41 wt%.

2. A dairy product as claimed in claim 1, which includes a preservative in an amount of from about 0.07 to 0.25 wt%.

3. A dairy product as claimed in claim 1, which includes an acidulant in an amount of from about 0.15 to 0.85 wt% which is effective to lower the pH level to about 2 to 5.

4. A dairy product as claimed in claim 3, in which the acidulant comprises at least one of phosphoric acid, sulphuric acid, adipic acid, tartaric acid, succinic acid, acetic acid, fumaric acid, propionic acid, citric acid, malic acid and lactic acid.

5. A dairy product as claimed in claim 1, in which the physical stabilizer comprises a cellulose compound, preferably at least one of carboxymethyl cellulose, carboxyethyl cellulose, and carboxypropyl cellulose.

6. A dairy product as claimed in claim 1, in which the physical stabilizer comprises at least one of a starch, xanthan gum, locust bean gum, and guar gum.

7. A dairy product as claimed in claim 1, in which the humectant comprises at least one of a saccharide, a gum, a chloride salt of sodium, glycerol, sucrose, fructose, glucose, propylene glycol, sodium chloride, sorbitol, mannitol, polydextrose, carboxymethyl cellulose, guar gum, molasses, potassium polymetaphosphate, triacetin, propionate, sodium lactate, monosodium, glutamate, corn syrup, glycine, 1,2-propanediol, and alginate.

8. A dairy product as claimed in claim 1, in which the shelf stable cream cheese filling has at least 50 wt% cream cheese and the humectant comprises about 2 to 10 wt% glycerine.

9. A shelf stable cheese filling comprising:

(a) cream cheese in an amount of from about 20 to 70 wt%, which comprises less than about 55 wt% water and more than about 33 wt% milk fat;

(b) a humectant in an amount of from about 25 to 65 wt%, which comprises about 2 to 10 wt% glycerine; and

(c) a physical stabilizer in an amount of from about 1 to 10 wt%, which comprises about 0.1 to 0.5 wt% of at least one of xanthan gum, guar gum, locust bean gum as a stabiliser, and about 1 to 7.5 wt% starch;

in which the humectant is intermixed with the cream cheese, and the cream cheese filling has a water content ranging from about 32 to 41 wt% and an $A_w$ ranging from about 0.75 to 0.91.

10. A cheese filling as claimed in claim 9, which includes:

(a) a preservative in an amount of from about 0.07 to 0.25 wt%: and

(b) an acidulant in an amount of from about 0.15 to 0.85 wt% to adjust the pH level to about 2 to 5.

11. A cheese filling as claimed in claim 9, in which the $A_w$ is about 0.80 to 0.89.

12. A cheese filling as claimed in claim 10, in which the pH level is about 3 to 4.5.

13. A cheese filling as claimed in claim 10, in which the acidulant comprises at least one of phosphoric acid, sulphuric acid, adipic acid, tartaric acid, succinic acid, acetic acid, fumaric acid, propionic acid, citric acid, malic acid, and lactic acid.

14. A cheese filling as claimed in claim 9, in which the humectant comprises less than 1 wt% of a sodium chloride.

15. A method of preserving a cream cheese filling to provide shelf stability comprising mixing:

(a) from about 20 to 70 wt% of a cream cheese which comprises less than about 55 wt% water and more than about 33 wt%. milk fat,

(b) from about 29 to 50 wt% of a humectant which is effective to lower $A_w$ to less than about 0.91, and

(c) from about 1 to 10 wt% a physical stabilizer,

in which the cream cheese filling has a water content ranging from about 32 to 41 wt%.

16. A method as claimed in claim 15, which includes mixing the cream cheese filling with:

(a) a preservative in an amount of from about 0.05 to 0.35 wt%; and

(b) an acidulant in an amount of from about 0.15 to 0.85 wt%, which is effective to lower the pH to about 2 to 5.

17. A method as claimed in claim 15, in which the humectant comprises about 2 to 10% by weight glycerine based on the total weight of the shelf stable cream cheese.

18. A method as claimed in claim 15, which includes contacting the cream cheese with a physical stabilizer comprising about 0.1 to 0.5% by weight of a cellulose compound, based on the total weight of the shelf stable cream cheese.

**Patentansprüche**

1. Ein lagerstabiles Molkereiprodukt, welches umfaßt:

   (a) von etwa 20 bis 70 Gew.-% eines Vollfettkäses, der weniger als etwa 55 Gew.-% Wasser und mehr als etwa 33 Gew.-% Milchfett umfaßt;

   (b) von etwa 29 bis 50 Gew.-% eines Feuchthaltemittels, das darin wirksam ist, $A_w$ auf weniger als etwa 0,91 zu senken; und

   (c) von etwa 1 bis 10 Gew.-% eines physikalischen Stabilisators,

   wobei das Feuchthaltemittel mit dem Vollfettkäse vermischt ist und das lagerstabile Molkereiprodukt einen Wassergehalt im Bereich von etwa 32 bis 41 Gew.-% besitzt.

2. Ein Molkereiprodukt nach Anspruch 1, welches ein Konservierungsmittel in einer Menge von etwa 0,07 bis 0,25 Gew.-% einschließt.

3. Ein Molkereiprodukt nach Anspruch 1, welches ein Säuerungsmittel in einer Menge von etwa 0,15 bis 0,85 Gew.-% einschließt, das darin wirksam ist, das pH-Niveau auf etwa 2 bis 5 zu senken.

4. Ein Molkereiprodukt nach Anspruch 3, bei dem das Säuerungsmittel wenigstens eines aus der Gruppe: Phosphorsäure, Schwefelsäure, Adipinsäure, Weinsäure, Bernsteinsäure, Essigsäure, Fumarsäure, Propionsäure, Zitronensäure, Äpfelsäure und Milchsäure umfaßt.

5. Ein Molkereiprodukt nach Anspruch 1, bei dem der physikalische Stabilisator eine Zelluloseverbindung umfaßt, vorzugsweise eine aus der Gruppe: Carboxymethylzellulose, Carboxyethylzellulose und Carboxypropylzellulose.

6. Ein Molkereiprodukt nach Anspruch 1, bei dem der physikalische Stabilisator wenigstens einen aus der Gruppe: eine Stärke, Xanthangummi, Johannisbrotgummi und Guar Gum umfaßt.

7. Ein Molkereiprodukt nach Anspruch 1, bei dem das Feuchthaltemittel wenigstens eines aus der Gruppe: ein Sacharid, ein Gummi, ein Chloridsalz von Natrium, Glycerin, Saccharose, Fructose, Glucose, Propylenglykol, Natriumchlorid, Sorbitol, Mannitol, Polydextrose, Carboxymethylzellulose, Guar Gum, Melasse, Kaliumpolymetaphosphat, Triacetin, Propionat, Natriumlactat, Mononatriumglutamat, Maisstärkesirup, Glycin, 1,2-Propandiol und Alginat umfaßt.

8. Ein Molkereiprodukt nach Anspruch 1, bei dem die lagerstabile Vollfettkäsefüllung wenigstens 50 Gew.-% Vollfettkäse besitzt und das Feuchthaltemittel etwa 2 bis 10 Gew.-% Glycerin umfaßt.

9. Eine lagerstabile Käsefüllung, welche umfaßt:

   (a) Vollfettkäse in einer Menge von etwa 20 bis 70 Gew.-%, der weniger als etwa 55 Gew.-% Wasser und mehr als etwa 33 Gew.-% Milchfett umfaßt;

   (b) ein Feuchthaltemittel in einer Menge von etwa 25 bis 65 Gew.-%, das etwa 2 bis 10 Gew.-% Glycerin umfaßt; und

   (c) einen physikalischen Stabilisator in einer Menge von etwa 1 bis 10 Gew.-%, der etwa 0,1 bis 0,5 Gew.-% von wenigstens einem aus der Gruppe: Xanthangummi, Guar Gum, Johannisbrotgummi als einem Stabilisator und etwa 1 bis 7,5 Gew.-% Stärke umfaßt;

   wobei das Feuchthaltemittel mit dem Vollfettkäse vermischt ist und die Vollfettkäsefüllung einen Wassergehalt im Bereich von etwa 32 bis 41 Gew.-% und eine $A_w$ im Bereich von etwa 0,75 bis 0,91 besitzt.

10. Eine Käsefullung nach Anspruch 9, welche einschließt:

   (a) ein Konservierungsmittel in einer Menge von-etwa 0,07 bis 0,25 Gew.-%; und

   (b) ein Säuerungsmittel in einer Menge von etwa 0,15 bis 0,85 Gew.-%, um das pH-Niveau auf etwa 2 bis 5 einzustellen.

11. Eine Käsefüllung nach Anspruch 9, bei der die $A_w$ etwa 0,80 bis 0,89 beträgt.

12. Eine Käsefüllung nach Anspruch 10, bei der das pH-Niveau etwa 3 bis 4,5 beträgt.

13. Eine Käsefüllung nach Anspruch 10, bei der das Säuerungsmittel wenigstens eines aus der Gruppe: Phosphorsäure, Schwefelsäure, Adipinsäure, Weinsäure, Bernsteinsäure, Essigsäure, Fumarsäure, Propionsäure, Zitronensäure, Äpfelsäure und Milchsäure umfaßt.

14. Eine Käsefüllung nach Anspruch 9, bei der das Feuchthaltemittel weniger als 1 Gew.-% eines Natriumchlorids umfaßt.

15. Ein Verfahren zur Konservierung einer Vollfettkäsefüllung, um Lagerstabilität zu verleihen, welches umfaßt, daß:

   (a) von etwa 20 bis 70 Gew.-% eines Vollfettkäses, der weniger als etwa 55 Gew.-% Wasser und mehr als etwa 33 Gew.-% Milchfett umfaßt,

   (b) von etwa 29 bis 50 Gew.-% eines Feuchthaltemittels, das darin wirksam ist, $A_w$ auf weniger als 0,91 zu senken, und

   (c) von etwa 1 bis 10 Gew.-% eines physikalischen Stabilisators

   vermischt werden, wobei die Vollfettkäsefüllung einen Wassergehalt im Bereich von etwa 32 bis 41 Gew.-% besitzt.

16. Ein Verfahren nach Anspruch 15, welches einschließt, daß die Vollfettkäsefüllung vermischt wird mit:

   (a) einem Konservierungsmittel in einer Menge von etwa 0,05 bis 0,35 Gew.-%; und

   (b) einem Säuerungsmittel in einer Menge von etwa 0,15 bis 0,85 Gew.-%, das darin wirksam ist, den pH auf etwa 2 bis 5 zu senken.

17. Ein Verfahren nach Anspruch 15, bei dem das Feuchthaltemittel etwa 2 bis 10 Gew.-% Glycerin umfaßt, bezogen auf das Gesamtgewicht des lagerstabilen Vollfettkäses.

18. Ein Verfahren nach Anspruch 15, welches einschließt, daß der Vollfettkäse mit einem physikalischen Stabilisator in Kontakt gebracht wird, der etwa 0,1 bis 0,5 Gew.-% einer Zelluloseverbindung umfaßt, bezogen auf das Gesamtgewicht des lagerstabilen Vollfettkäses.

**Revendications**

1. Produit laitier stable au stockage comprenant :

   a) environ 20 % à 70 % en poids d'un fromage à la crème qui comprend moins d'environ 55 % en poids d'eau et plus d'environ 33 % en poids de matières grasses de lait;
   b) environ 29 % à 50 % en poids d'un humectant qui est capable de réduire $A_w$ à moins d'environ 0,91 ; et
   c) environ 1 % à 10 % en poids d'un stabilisateur physique, dans lequel l'humectant est mélangé au fromage à la crème, le produit laitier stable au stockage possédant une teneur en eau allant d'environ 32 % à 41 % en poids.

2. Produit laitier selon la revendication 1, qui comprend un conservateur à raison d'environ 0,07 % à 0,25 % en poids.

3. Produit laitier selon la revendication 1, qui comprend un produit acidifiant à raison d'environ 0,15 % à 0,85 % en poids capable de réduire la valeur du pH à environ 2 à 5.

4. Produit laitier selon la revendication 3, dans lequel le produit acidifiant comprend au moins un composé du groupe constitué par l'acide phosphorique, l'acide sulfurique, l'acide adipique, l'acide tartrique, l'acide succinique, l'acide acétique, l'acide fumarique, l'acide propionique, l'acide citrique, l'acide malique et l'acide lactique.

5. Produit laitier selon la revendication 1, dans lequel le stabilisateur physique comprend un composé cellulosique, de préférence au moins un composé du groupe constitué par la carboxyméthylcellulose, la carboxyéthylcellulose et la carboxpropylcellulose.

6. Produit laitier selon la revendication 1, dans lequel le stabilisateur physique comprend au moins un composé du groupe constitué par l'amidon, la gomme xanthane, la gomme de caroube et la gomme guar.

7. Produit laitier selon la revendication 1, dans lequel l'humectant comprend au moins un composé du groupe constitué par un saccharide, une gomme, un sel chlorure de sodium, le glycérol, le saccharose, le fructose, le glucose, le propylèneglycol, le chlorure de sodium, le sorbitol, le mannitol, le polydextrose, la carboxyméthylcellulose, la gomme guar, la mélasse, le polymétaphosphate de potassium, la triacétine, un propionate, le lactate de sodium, le glutamate monosodique, du sirop de maïs, la glycine, le 1,2-propanediol et un alginate.

8. Produit laitier selon la revendication 1, dans lequel la garniture de type fromage à la crème stable au stockage possède au moins 50 % en poids de fromage à la crème, l'humectant comprenant environ 2 % à 10 % en poids de glycérine.

9. Garniture de type fromage à la crème stable au stockage comprenant :

a) environ 20 % à 70 % en poids d'un fromage à la crème qui comprend moins d'environ 55 % en poids d'eau et plus d'environ 33 % en poids de matières grasses de lait;
b) un humectant à raison d'environ 25 % à 65 % en poids qui comprend environ 2 % à 10% en poids de glycérine; et
c) un stabilisateur physique à raison d'environ 1 % à 10 % en poids, qui comprend environ 0,1 % à 0,5 % en poids d'au moins un composé du groupe constitué par la gomme xanthane, la gomme guar, la gomme de caroube à titre de stabilisateur et environ 1 % à 7,5 % en poids d'amidon;

dans laquelle l'humectant est mélangé au fromage à la crème, la garniture de type fromage à la crème possédant une teneur en eau allant d'environ 32 % à 41 % en poids et une $A_w$ allant d'environ 0,75 à 0,91.

10. Garniture de type fromage selon la revendication 9 qui comprend:

a) un conservateur à raison d'environ 0,07 % à 0,25 % en poids; et
b) un produit acidifiant à raison d'environ 0,15 % à 0,85 % en poids de manière à ajuster la valeur du pH à environ 2 à 5.

11. Garniture de type fromage selon la revendication 9, dans laquelle $A_w$ a une valeur d'environ 0,80 à 0,89.

12. Garniture de type fromage selon la revendication 10, dans laquelle le pH a une valeur d'environ 3 à 4,5.

13. Garniture de type fromage selon la revendication 10, dans laquelle le produit acidifiant comprend au moins un composé du groupe constitué par l'acide phosphorique, l'acide sulfurique, l'acide adipique, l'acide tartrique, l'acide succinique, l'acide acétique, l'acide fumarique, l'acide propionique, l'acide citrique, l'acide malique et l'acide lactique.

14. Garniture de type fromage selon la revendication 9 dans laquelle l'humectant comprend moins de 1 % en poids de chlorure de sodium.

15. Procédé de conservation d'une garniture de type fromage à la crème procurant une stabilité au stockage comprenant une étape consistant à mélanger :

a) environ 20 % à 70 % en poids d'un fromage à la crème qui comprend moins d'environ 55 % en poids d'eau et plus d'environ 33 % en poids de matières grasses de lait;

b) environ 29 % à 50 % en poids d'un humectant qui est capable de réduire $A_w$ à moins d'environ 0,91 ; et

c) environ 1 % à 10 % en poids d'un stabilisateur physique,

dans lequel la garniture de type fromage à la crème a une teneur en eau allant d'environ 32 % à 41 % en poids.

16. Procédé selon la revendication 15, comprenant une étape consistant à mélanger la garniture de type fromage à la crème à :

a) un conservateur à raison d'environ 0,05 % à 0,35 % en poids ; et

b) un produit acidifiant à raison d'environ 0,15 % à 0,85 % en poids de manière à abaisser la valeur du pH à environ 2 à 5.

17. Procédé selon la revendication 15 dans lequel l'humectant comprend de la glycérine à raison d'environ 2 % à 10 % en poids du poids total du fromage à la crème stable au stockage.

18. Procédé selon la revendication 15 qui comprend une étape consistant à mettre en contact le fromage à la crème avec un stabilisateur physique comprenant un composé cellulosique à raison d'environ 0,1 % à 0,5 % en poids du poids total du fromage à la crème stable au stockage.